# EUROPÄISCHE PATENTSCHRIFT

(11) **EP 1 193 932 B1**
(45) Veröffentlichungstag und Bekanntmachung des Hinweises auf die Patenterteilung: **25.04.2007**
(21) Anmeldenummer: 01120552.3
(22) Anmeldetag: 29.08.2001
(51) Int. Cl.: H04L 25/49

(54) **Datenübertragung mittels Pulsweitenmodulation und asynchrone Signale**
Data transmission using pulse width modulation and asynchronous signals
Transmission de données à modulation de longeur d'impulsions et à signaux asynchrones

(30) Priorität: 27.09.2000 DE 10049090
(43) Veröffentlichungstag der Anmeldung: 03.04.2002
(73) Patentinhaber: ROBERT BOSCH GMBH, 70442 Stuttgart (DE)
(72) Erfinder: Spichale, Thomas, 69436 Schoenbrunn (DE)

(56) Entgegenhaltungen:
- EP-A- 0 778 179
- WO-A-98/05139
- US-A- 5 436 897
- ISERNHAGEN R ET AL: "SIMULATION - SCHLUSSEL ZUM EINSATAZ EFFIZIENTE PLANUNG VON BUSSYSTEMEN IM AUTOMOBIL, 1. TIEL" ELEKTRONIK, FRANZIS VERLAG GMBH. MUNCHEN, DE, Bd. 43, Nr. 26, 27. Dezember 1994 (1994-12-27), Seiten 106-113, XP000491945 ISSN: 0013-5658

## Beschreibung

### Stand der Technik

Die Erfindung betrifft eine Vorrichtung, ein Verfahren sowie eine Schnittstelle zur Übertragung von Daten zwischen wenigstens zwei Teilnehmern, wobei wenigstens ein erster Teilnehmer ein pulsweitenmoduliertes Datensignal überträgt gemäß den Oberbegriffen der unabhängigen Ansprüche.

Die Übertragung von Daten in Form eines pulsweitenmodulierten Signals ist in der WO 98/05139 gezeigt. In einer besonderen Ausführungsform der synchronisierten Datenübertragung werden zwei unterschiedliche Informationsimpulse sowie ein Synchronisationsimpuls durch unterschiedliche Impulslängen erzeugt. Durch die drei im Rahmen einer Pulsweitenmodulation unterschiedenen Zustände kann damit Dateninformation sowie eine Synchronisierungsinformation übertragen werden. Der Einsatz dieses im Stand der Technik genannten Verfahrens sowie einer entsprechenden Schnittstelle zur Datenübertragung wird dabei in der zitierten Schrift insbesondere als Anwendung in einem Kraftfahrzeug dargestellt, beispielsweise bei der Verbindung zwischen einem Spannungsregler und dem Bordnetz eines Kraftfahrzeugs oder auch als Verbindung zwischen dem Spannungsregler und dem Mikrocomputer der digitalen Motorelektronik als Bestandteil des Steuergerätes.

Neben einer Vielzahl anderer Anwendungsmöglichkeiten, wie z.B. bei Werkzeugmaschinen, also im Produktionsgüterbereich, oder auch im Gebrauchsgüterbereich wird gerade im Automobilbereich durch die ständige Erweiterung elektronischer Systeme und deren Vernetzung zunehmend die Notwendigkeit sichtbar, konventionelle Verdrahtung durch Bus-Systeme und Subbus-Systeme zu ersetzen.

Dabei wird als, insbesondere zentrales, Hauptbus-System beispielsweise ein CAN-Bus eingesetzt, an welchen im Automobilbereich z. B. für das Schließsystem oder ein elektronisches Fensterhebersystem usw. ein Subbus-System insbesondere über ein Gateway angekoppelt ist.

Die EP 0 778 179 A2 zeigt ein Multiplex Kommunikationssystem, welches aus einer Vielzahl von gegenseitig verbundenen Knoten an einem Bus besteht. Dabei werden variabel pulsweiten modulierte Daten auf den Bus übertragen. Jeder Knoten wandelt dabei externe Steuerdaten in SPI-Daten und weiter in PWM-Daten und umgekehrt, die dann auf den Bus übertragen werden.

Die US 5,436,897 zeigt ein Verfahren und eine Vorrichtung zur seriellen Kommunikation zwischen zwei oder mehr Kommunikationsknoten in einen Datenbus. Dabei werden externe Signale bezüglich des Datenbusses die direkt von den Knoten empfangen werden, z. B. in parallelem Format, in serielle digitale Daten gewandelt, um diese auf den Datenbus zu übertragen.

Der Artikel "Simulation - Schlüssel zum Einsatz" aus der Kfz-Elektronik 26 von 1994 (XP 000491945, ISSN: 0013-5658) zeigt komplexe Netzwerk Topologien in Form von vermaschten Systemen, die aus einer Vielzahl von über Gateways gekoppelten Subnetzen bestehen. Dabei können auch Subnetze verschiedener Protokolle vermascht werden. Eine Protokollumsetzung ist nicht dargestellt, vielmehr erfolgt eine Weiterleitung an das jeweilige Subnetz.

Solche Subbus-Systeme sind robuste und einfache lokale Bussysteme, in der Regel mit niedriger Übertragungsrate, welche im Allgemeinen einem Hauptbus-System wie CAN untergeordnet sind. Solche Subbussysteme sind im Allgemeinen als Master Slave Systeme ausgebildet, wobei der die Masterfunktion ausübende Teilnehmer bzw. Knoten häufig das Gateway zum übergeordneten Hauptbussystem besitzt. Bekannte Subbus-Systeme in diesem Zusammenhang sind das BSS-System (Bitsynchrone Schnittstelle) sowie das LIN-Bussystem (local Interconnect Network). Bei solchen Subbus-Systemem wie LIN oder BSS werden in der Regel unterschiedliche Subbus-Protokolle eingesetzt. Das heißt, die Systeme nutzen zwar den gleichen Physical Layer, aber unterschiedliche Datenbitcodierungen. So wird beim LIN-Bus-System in der Regel eine Standard-NRZ-Codierung (Not Return to Zero) verwendet, wohingegen bei einem BSS-Bus eine Phasenmodellierung, im Speziellen eine Pulsweitenmodellierung als Codierung eingesetzt wird.

Bisher sind solche Subbus-Systeme, insbesondere die beiden genannten, so unterschiedlich, dass sie nicht gemischt kommunizieren können. Für die Hardware solcher Systeme hat dies zur Folge, dass man sich entweder einerseits für eine Variante entscheiden muss, oder dass sich zum Anderen die Kosten für eine Implementierung stark erhöhen. Des Weiteren wird dadurch die Flexibilität, von einem auf ein anderes Bus-System bzw. Bus-Protokoll zu wechseln, stark eingeschränkt. So sind bisher nur spezielle, sehr aufwendige elektronische Schaltungen bzw. Bausteine und sehr aufwendige Softwareimplementierungen in der Lage, ein Subbus-Protokoll, beispielsweise mit pulsweitenmodulierter Datencodierung auf ein anderes Subbus-Protokoll bzw. auf einem anderen Sub-Bus-Controller, beispielsweise mit asynchroner, binärer Datencodierung abzubilden.

Damit stellt sich die Aufgabe, eine solche gemischte Kommunikation unterschiedlicher Bus-, insbesondere Subbus-Systeme mit einfachen Mitteln zu realisieren.

### Vorteile der Erfindung

Diese Aufgabe wird gelöst durch ein Verfahren, eine Vorrichtung sowie eine Schnittstelle zur Übertragung von Daten zwischen wenigstens zwei Teilnehmern, wobei wenigstens ein erster Teilnehmer ein pulsweitenmoduliertes Datensignal überträgt und der wenigstens zweite Teilnehmer ein asynchrones Datensignal, welches aus Binärsignalen besteht, überträgt. Dabei übertragen beide Teilnehmer die Daten jeweils mit einer unterschiedlichen, vorgebbaren Übertragungsrate. Vorteilhafter Weise wird wenigstens eine der beiden Übertragungsraten insbesondere die des zweiten Teilnehmers derart angepasst, insbesondere erhöht, dass das pulsweitenmodulierte Datensignal des ersten Teilnehmers durch eine Anzahl der Binärsignale des asynchronen Datensignals nachgebildet wird.

Dadurch kann vorteilhafter Weise ein bitsynchroner Datenstrom insbesondere im Rahmen des BSS-Bus-Systems mit einem Standardcontrollerbaustein, beispielsweise einem UART-Baustein (Universal Asynchronous Receiver/Transmitter) erzeugt werden. Weiterhin von Vorteil ist, dass damit beispielsweise ein SCI-Protokoll (Scalable Coherent Interface IEEE-Standard 1596 in 1992) umgesetzt werden kann, so dass ein beispielsweise für den LIN-Bus ausgelegtes System ohne Modifikation der Hardware in ein pulsweitenmoduliertes Bus-System, beispielsweise BSS integriert werden kann.

Somit wird vorteilhafter Weise die gemischte Kommunikation unterschiedlicher Bus-Systeme, insbesondere Subbus-Systeme wie LIN oder BSS mit einfachen Mitteln möglich. Vorteilhafter Weise wird das pulsweitenmodulierte Datensignal des ersten Teilnehmers in einem Zeitabschnitt durch eine Anzahl der Binärsignale des asynchronen Datensignals nachgebildet, wobei der Zeitabschnitt abhängig von der Übertragungsrate des ersten Teilnehmers vorgegeben und/oder ermittelt wird.

Zweckmäßiger Weise wird die Anzahl der Binärsignale, mit denen das pulsweitenmodulierte Datensignal nachgebildet wird, abhängig von der Übertragungsrate des asynchronen Datensignals vorgegeben und/oder ermittelt.

Weiterhin von Vorteil ist, dass zumindest die Übertragungsrate des asynchronen Datensignals des wenigstens zweiten Teilnehmers derart variabel vorgebbar ist, dass damit die Anzahl der Binärsignale pro Zeitabschnitt, welcher aus der Übertragungsrate des pulsweitenmodulierten Datensignals ermittelbar ist, einstellbar ist.

Weiterhin zweckmäßig ist, dass in einer speziellen Ausführungsform die Daten des asynchronen Datensignals in Datengruppen aus Binärsignalen mit einem Start-Binärsignal, wenigstens einem Stop-Binärsignal und wenigstens einem zwischen dem Start-Binärsignal und dem Stop-Binärsignal übertragenen Daten-Binärsignal übertragen werden, wie dies beispielsweise bei einem UART-Controller der Fall ist.

In einer speziellen Ausführungsform, insbesondere BSS, werden die Daten durch das pulsweitenmodulierte Datensignal synchronisiert derart übertragen, dass zu Beginn der Datenübertragung wenigstens ein Synchronisationssignal übertragen wird.

Bezogen auf die speziellen Ausführungsformen bedeutet dies, dass mit einer mehrfach erhöht eingestellten Datenrate, bezogen auf das SCI-Protokoll, also beispielsweise den LIN-Bus, gegenüber der bekannten Datenrate auf dem BSS-Bus eine Kommunikation auf den beiden unterschiedlichen Bus-Systemen möglich ist. Vorteilhafter Weise werden über bestimmte Datenmuster im Daten-Byte eines Asynchronbausteins beispielsweise eines UART-Controllers die Phasen im Bit-Timing des BSS-Protokolls nachgebildet und beim Empfang rekonstruiert.

Weitere Vorteile und vorteilhafte Ausgestaltungen ergeben sich aus der Beschreibung und den Ansprüchen.

### Zeichnung

Die Erfindung wird im Weiteren anhand der in der Zeichnung dargestellten Figuren vorgestellt und näher erläutert.

### Dabei zeigt

Figur 1 ein Bus- insbesondere Subbus-System, bei welchem die Masterfunktion von einem asynchronen Netzknoten, insbesondere einem LIN-Master-System, ausgeübt wird, wobei weitere, insbesondere BSS-Slave-Knoten, über das Bus-System verknüpft sind.

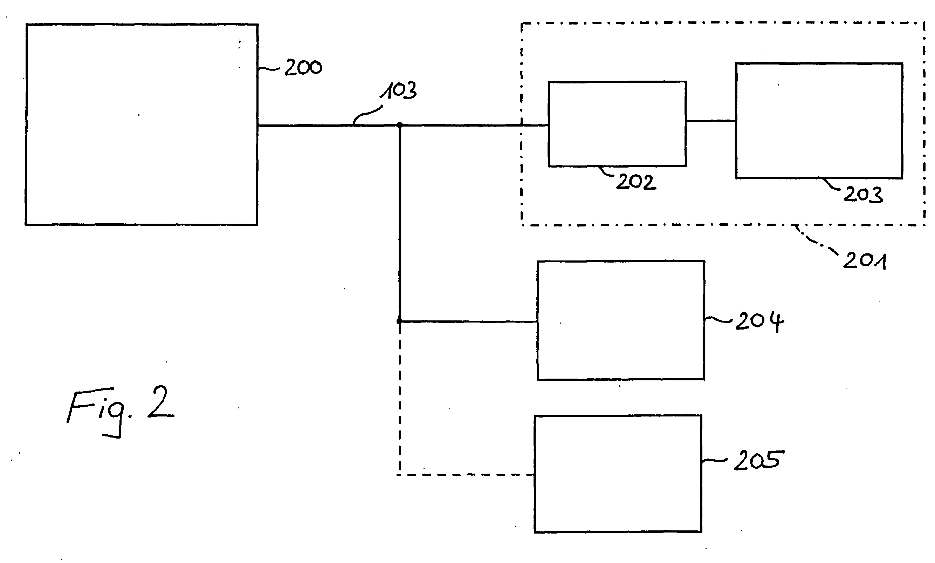

Figur 2 zeigt ein weiteres Bus-, insbesondere Subbus-System, bei welchem die Masterfunktion durch einen Teilnehmer, der pulsweitenmodulierte Datenübertragung betreibt, ausgeübt wird, insbesondere ein BSS-Mastersystem. An diesem ist über ein Bus-System ein asynchrones Slave-System insbesondere ein LIN-Slave-System sowie weitere Knoten angebunden.
In Figur 3 ist beispielhaft der Signalverlauf eines pulsweitenmodulierten Datensignals dargestellt.
Figur 4 zeigt die Datencodierung eines asynchronen Datensignals sowie die Abbildung des pulsweitenmodulierten Datensignals durch das asynchrone Datensignal.
In Figur 5 ist noch einmal der Zusammenhang des pulsweitenmodulierten Datensignals mit jeweils einem asynchronen Datenwort und einer darin auftretenden Unschärfe im Rahmen von Toleranzen innerhalb der Datensignale dargestellt.

### Beschreibung der Ausführungsbeispiele

Im Weiteren wird für ein erfindungsgemäßes pulsweitenmoduliertes Datensignal ein BSS-Datenstrom sowie das entsprechende Protokoll und für das asynchrone Datensignal ein LIN-Datenstrom sowie das zugehörige Protokoll bzw. entsprechend ein Standard-UART-Controller beschrieben. Diese konkreten Beispiele werden im Rahmen des Ausführungsbeispiels eingesetzt, beschränken den erfindungswesentlichen Gegenstand, bezogen auf ein pulsweitenmoduliertes Protokoll sowie ein asynchrones Protokoll, aber nicht.

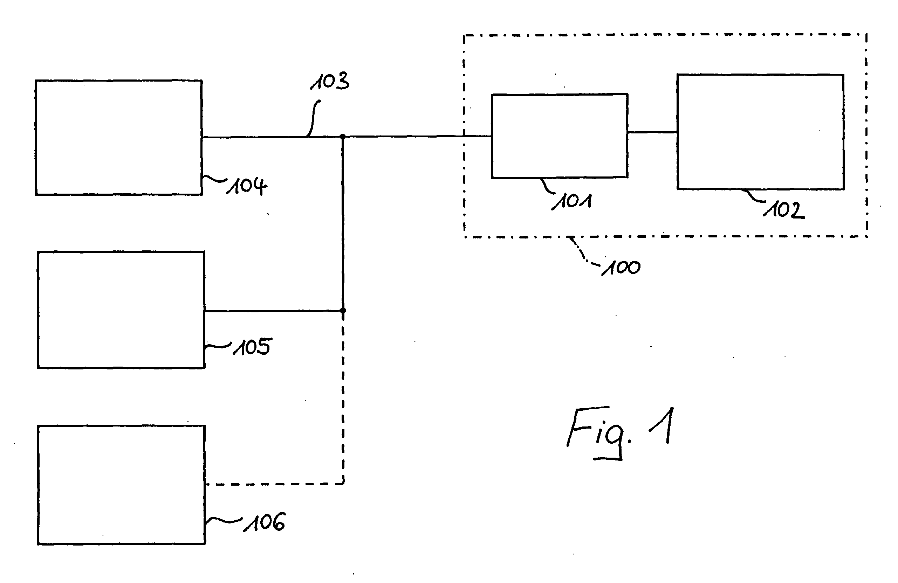

Figur 1 zeigt ein Bus-System 103, welches als Leitungssystem bzw. als Leitung die Grundlage für den Physical Layer eines OSI Schichtenmodells darstellt, aber nicht Teil der physikalischen Schicht ist. Daran sind mit 104 und 105 Slave-Knoten, insbesondere BSS-Slave-Knoten angeschlossen. Diese Slave-Knoten können in Aktuatoren, Sensoren oder Ähnlichem integriert sein oder diese an das Bus-System 103 ankoppeln. Optional können weitere Teilnehmer bzw. Knoten 106, beispielsweise auch Gateways zu weiteren Subbus-Systemen angebunden sein. Die Masterfunktion in Figur 1 wird beispielhaft durch ein LIN-Mastersystem 100 mit einem Leitungstreiber 101 sowie einem Controller und UART-Baustein 102 realisiert. Der Controller 102 kann dabei auch als erfindungsgemäße Schnittstelle des BSS-Systems zu einem LIN-Bussystem dienen.

Ein solches wie in Figur 1 dargestelltes Subbus-System dient vornehmlich zur Vernetzung von Aktoren und Sensoren in einem kleinen Bereich, beispielsweise innerhalb einer Autotür. Solche Systeme werden häufig als Master-Slave-Systeme ausgelegt, wobei der Subbus-Master meist noch über eine weitere Schnittstelle zum Hauptsytem-Bus, beispielsweise einem CAN- oder auch einem TTP-Bus zur Anbindung an die globale Vernetzung verfügt. Andererseits kann der Subbus-Master auch Teil eines Steuergerätes insbesondere zur Steuerung von Betriebsabläufen bei einem Kraftfahrzeug sein.

Um bisherige Vernetzungskosten zu reduzieren, werden anstatt der herkömmlichen Verkabelung bzw. Verdrahtung vorgestellte Subbus-Systeme eingesetzt. Die Leitung 103 dient als Basis für die Bit-Übertragungsschicht, den sogenannten Physical Layer entsprechend dem OSI-Schichtenmodell, ist selbst aber nicht Bestandteil dieser Schicht. Die Bitübertragungsschicht ist die elektrische bzw. funktionelle Schnittstelle zum physikalischen Übertragungsmedium, eben hier der Leitung.

Statt einem LIN-Master-System, wie in Figur 1, kann auch ein BSS-Master-System vorliegen. Dabei erhält beispielsweise der BSS-Master 200 eine Schnittstelle oder Gateway zum Hauptbus-System, wie beispielsweise CAN, und gleichzeitig eine Verbindung zum Bus-System 103. An dieses ist mit 201 ein LIN-Slave-System angebunden. Dieses enthält wiederum einen Leitungstreiber 202 sowie einen Controller und UART-Baustein 203. An das LIN-Slave-System ebenso wie an das LIN-Master-System sind über Schnittstellen beispielsweise des Controllers bzw. UART ebenso weitere Subbus-Systeme bzw. Sensoren oder Aktuatoren an das Subbus-System anbindbar, womit auch hier wenigstens Teile, wie z.B. der Controller bzw. UART, des LIN-Slavesystems als erfindungsgemäße Schnittstelle zur gemischten Kommunikation eines LIN-Systems mit einem BSS-System dienen können.

Mit 204 sind weitere Teilnehmer beispielsweise als BSS-Knoten oder LIN-Slave-Systeme an das Bus-System 103 angeschlossen. Auch hier können die Slave-Systeme bzw.

Knoten als Teilnehmer in die jeweiligen anzubindenden Elemente, insbesondere Aktoren und Sensoren integriert sein oder diese anderweitig mit dem Bus-System verbinden. Optional sind weitere Teilnehmer 205 an das Bus-System anschließbar; ebenso auch mit einem Gateway weitere Subbus-Systeme.

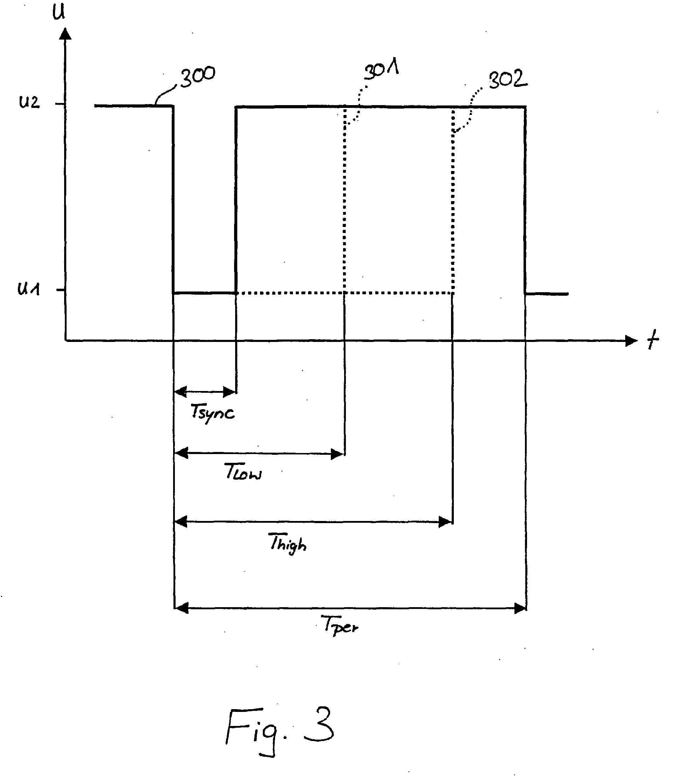

Die zu übertragende Information bzw. die zu übertragenden Daten des BSS-Protokolls werden, wie bereits genannt, pulsweitenmoduliert dargestellt. Eine solche Darstellung ist in Figur 3 offenbart. Darin wird beispielhaft in einem Spannungs-Zeit-Diagramm der jeweilige Pegel U1 bzw. U2 über der Zeit t dargestellt. Der Lowpegel U1 bzw. Null("0")-Pegel ist dabei beispielsweise Masse GND und der Highpegel bzw. das Eins("1")-Signal U2 entspricht z.B. einer Versorgungsspannung, insbesondere der Batteriespannung U_{bat}.

Mit 300 ist der Signalverlauf eines ersten Zustands, der Synchronisationsinformation oder des Synchronisationssignales sync dargestellt. Der Synchronzeitabstand für den Lowpegel T_{sync} beträgt dabei beispielsweise 1/8 der Gesamtperiodendauer Tₚₑᵣ. Diese Gesamtperiodendauer für das pulsweitenmodulierte Signal ist durch Vorgabe der Übertragungsrate einstellbar.

Der angedeutete Verlauf 301 des Datensignals entspricht einer Lowsignalinformation mit einem Null- oder Lowsignalzeitabstand T_{low}. T_{low} ist dabei beispielsweise 3/8 der Gesamtperiodendauer. Durch diese Pulslänge ist z.B. die Null- oder Lowinformation darstellbar.

Der dritte darzustellende Zustand ist die High- oder Einssignalinformation, welche mit Signalverlauf 302 angedeutet ist. T_{high} bzw. der Highsignalzeitabstand beträgt dabei beispielsweise 6/8 der Gesamtperiodendauer Tₚₑᵣ. Jede andere Aufteilung der jeweiligen Pulsweite für die drei Zustände ist ebenso einsetzbar. Somit sind hier beispielhaft durch die Signalverläufe 300, 301 und 302 drei Zustände darstellbar, welche zur Realisierung einer Synchronisationsinformation, einer Lowsignalinforma-tion sowie einer Highsignalinformation eingesetzt werden. Damit sind beliebige Daten sychronisiert übertragbar.

Solche pulsweitenmodulierten Datensignale werden beispielsweise im Rahmen des BSS-Protokolls eingesetzt. Dabei kommt der periodische Sync-Impuls sync vom Mastersystem. Alle Slaves bzw. Slavesysteme synchronisieren dabei auf die fallende bzw. Low-Flanke.

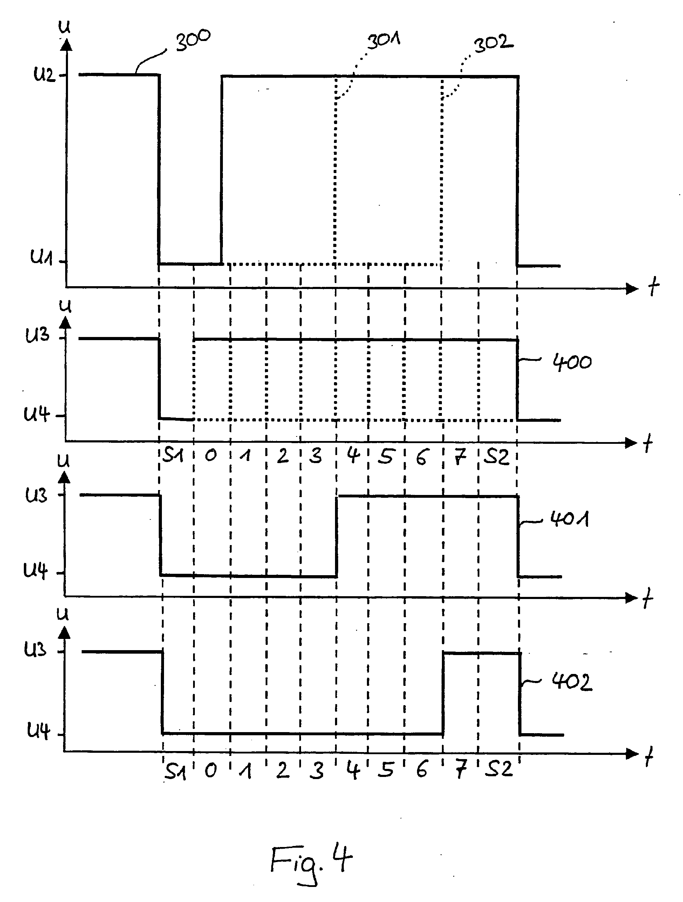

In Figur 4 ist oben nochmals die eben in Figur 3 beschriebene pulsweitenmodulierte Darstellung gezeigt. Das heißt, bei einem z.B. BSS-Protokoll wird die Dateninformation in die Pulsbreite eines periodischen Signals codiert. Um diese Information durch einen beispielsweise NRZ-codierten Datenstrom mit Binärsignalen nachzubilden, wird nun die Übertragungsrate im NRZ-Datenstrom erhöht (Gleiches gilt natürlich auch bei einem RZ-Datenstrom). Das heißt, zur Darstellung des BSS-Bit-Timings werden mehrere Datenbits im NRZ-Datenstrom verwendet.

Mit 400 ist nunmehr ein solcher NRZ-codierter Datensignalverlauf vorzugsweise asynchron dargestellt. In diesem Beispiel wird die Gesamtperiodendauer Tₚₑᵣ aus Figur 3 durch 8 (Daten-) Binärsignale bzw. Datenbits sowie ein Startbinärsignal bzw. Startbit S1 und ein Stopbit S2 nachgebildet. Abhängig von der Übertragungsrate kann hierbei aber jede andere Datenbitzahl mit und ohne Start- bzw. Stopbit als Anzahl an Binärsignalen Verwendung finden. So ist beispielsweise ebenso eine Nachbildung statt mit 8 Datenbits bzw. mit 10 Bit auch mit 4 Datenbits möglich. Wird die Übertragungsrate des LIN-Systems bzw. des UART-Controllers so gewählt, dass beispielsweise ein Byte plus Start- und Stopbit zwei Periodenzeitdauern Tₚₑᵣ umfasst, also zwei Periodenzeitdauern insgesamt mit 10 Bit nachgebildet werden, können zwei BSS-codierte Informationen, beginnend mit dem Start-Bit S1 und schließend mit dem Stopbit S2 nachgebildet werden. Dabei sind mit U3 ein Highpegel des nachbildenden Systems und mit U4 ein Lowpegel desselben dargestellt. Diese Pegel sind beliebig wählbar bzw. systemimmanent und können ebenso den Pegeln U1 bzw. U2 entsprechen.

Beginnend mit dem Startbit S1 ist das folgende Byte, also die Datenbits von 0 bis 7, als Binärsignale beliebig setzbar, um das Datensignal gemäß den Signalverläufen 300, 301 bzw. 302 nachzubilden. Wird beispielsweise der Datensignalverlauf gemäß 301 nachgebildet, so werden, wie in Signalverlauf 401 gezeigt, das Startbit und die ersten vier Datenbits zu low, also auf Pegel U4 gesetzt. Damit kann der Signalverlauf 301 im Rahmen bestimmter Toleranzen im Bit-Timing nachgeahmt werden. Ebenso ist dies mit Signalverlauf 302 durch den Signalverlauf 402, in welchem neben dem Startbit beispielsweise die ersten 6 Bit low übertragen werden, möglich. Ebenso wird das Synchronisationssignal z.B. mit S1 gleich low so nachgeahmt.

Wie hier zu erkennen ist, kann durch eine Wahl der Übertragungsrate des pulsweitenmodulierten Signals, also der Periodendauer Tper desselben sowie durch die Wahl der Übertragungsrate des nachbildenden Datensignals die Feinheit der Bit-Nachbildung beliebig eingestellt werden.

Da z. B. ein BSS-Knoten gemäß der BSS-Spezifikation eine Sendetoleranz von ± 3% des typischen Wertes aufweisen kann, kann in der Regel das pulsweitenmodulierte Signal insbesondere durch die vorgegebene Einteilung der Start-, Daten- und Stopbits nur annähernd nachgebildet werden. Auch sind gewisse Ungenauigkeiten denkbar, wenn die Übertragungsraten beider Datenströme nicht exakt ganzzahlig ineinander umrechenbar sind.

Da daneben sowohl die Sende- als auch die Empfangstoleranzen bei pulsweitenmodulierten Datensignalen, insbesondere bezogen auf die BSS-Spezifikation, zeitliche Abweichungen des Flankenwechsels zulassen, ist es wichtig, zu unterscheiden, ob einerseits die von der asynchronen Schnittstelle, insbesondere UART gesendeten Daten von einem BSS-Knoten gelesen werden können und ob zum Anderen die pulsweitenmodulierten Signale eines BSS-Knotens an einem Microcontroller, UART richtig erkannt und interpretiert werden können.

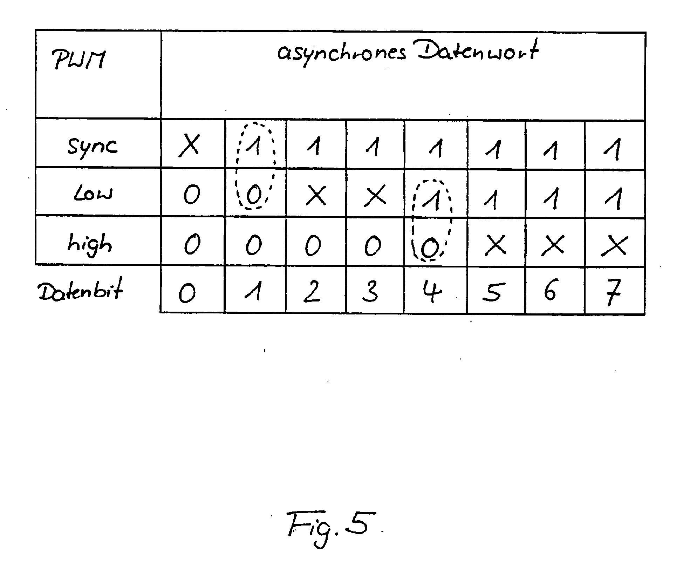

Figur 5 zeigt eine solche Zuordnung des pulsweitenmodulierten Signals zu jeweils einem asynchronen Datenwort. In der Tabelle sind Start- und Stopbit vernachlässigt, da sie eindeutig erkennbar sind. Die Mehrdeutigkeit der Datenbits wird durch die verschiedenen möglichen Zeitpunkte des Flankenwechsels im Rahmen der Toleranz sowie die Art der Bit-Erkennung des UARTs durch Oversampling verursacht und ist durch "X" gekennzeichnet.

Wird wie hier nur 1/10 der Periodendauer Tₚₑᵣ als Unterteilung zur Darstellung der pulsweitenmodulierten Signale verwendet, kann trotzdem eine eindeutige Unterscheidung stattfinden. So ist das Synchronisationssignal sync und das Low-Signal low eindeutig durch Datenbit 1 unterscheidbar. Ebenso ist das Low- und das High-Signal high in diesem Beispiel durch Datenbit 4 eindeutig unterscheidbar. Das bedeutet, selbst schlechte asynchrone Controller, insbesondere UARTs, welche beispielsweise kein Verwerfen der im Flankenbereich der Signale liegenden Abtastwerte durchführen, selbst ohne Mittelwertbildung der nicht verworfenen Signale, können eingesetzt werden.

Umgekehrt ergibt sich für den Empfang eines Synchronimpulses am UART die Möglichkeit, in hexadezimaler Darstellung FF und FE, also in binärer Darstellung 01111111 (Datenbist 0-7) oder 11111111 einzusetzen. Eine 0- oder Low-Information kann mit FC, F8 und F0 (hexadezimal) dargestellt werden. Die 1-oder High-Information kann mit E0, C0, 80 und 00 (hexadezimal), bezogen auf dieses Beispiel dargestellt werden. Damit können trotz verschiedener Einteilungen von BSS-Impulsen und UART-Bits die Impulse durch die asynchrone Schnittstelle sowohl empfangen als auch gesendet werden.

Mit der vorgestellten Erfindung besteht somit prinzipiell die Möglichkeit, Subbus-Systeme bzw. Subbus-Komponenten mit pulsweitenmodulierten Datensignalen und Subbus-Systeme sowie Subbus-Komponenten mit asynchronen, insbesondere NRZ-codierten Datensignalen gemischt kommunizieren zu lassen, wobei dies, insbesondere bei BSS und LIN, auf der gleichen Hardware möglich ist. Damit sind solche Subbus-Protokolle bzw. die entsprechenden Datensignale je nach Bedarf bei gleicher Hardwarekonfiguration verwendbar bzw. gegeneinander austauschbar.

Dabei muß wenigstens eine der beiden Übertragungsraten, insbesondere die des asynchronen Datenstroms also des UART bzw. LIN-Systems, so angepasst werden, insbesondere erhöht, dass das pulsweitenmodullierte Signal durch eine Anzahl Binärsignale nachgebildet werden kann. Dazu ist eine Senkung (oder Erhöhung) der Übertragungsrate des Pulsweitenmodulierten Signals ebenso denkbar wie eine Erhöhung (oder Senkung) der Übertragungsrate des asynchronen insbesondere NRZ-Datenstroms.

## Patentansprüche

1. Verfahren zur Übertragung von Daten zwischen wenigstens zwei Teilnehmern (200, 201), wobei wenigstens ein erster Teilnehmer(200) ein pulsweitenmoduliertes Datensignal überträgt, **dadurch gekennzeichnet, dass** der wenigstens zweite Teilnehmer (201) ein asynchrones Datensignal, welches aus Binärsignalen besteht, überträgt, wobei beide Teilnehmer (200, 201) die Daten jeweils mit einer unterschiedlichen, vorgebbaren Übertragungsrate übertragen und eine der beiden Übertragungsraten, insbesondere die des zweiten Teilnehmers (201) derart angepasst, insbesondere erhöht, wird, dass das pulsweitenmodulierte Datensignal des ersten Teilnehmers durch eine Anzahl der Binärsignale des asynchronen Datensignals nachgebildet wird.

2. Verfahren nach Anspruch 1, **dadurch gekennzeichnet, dass** das pulsweitenmodulierte Datensignal des ersten Teilnehmers (200) in einem Zeitabschnitt (Tₚₑᵣ) durch eine Anzahl der Binärsignale des asynchronen Datensignals nachgebildet wird, welcher abhängig von der Übertragungsrate des ersten Teilnehmers (200) vorgegeben und/oder ermittelt wird.

3. Verfahren nach Anspruch 1, **dadurch gekennzeichnet, dass** die Anzahl der Binärsignale, mit denen das pulsweitenmodulierte Datensignal nachgebildet wird, abhängig von der Übertragungsrate des asynchronen Datensignals vorgegeben und/oder ermittelt wird.

4. Verfahren nach Anspruch 1, **dadurch gekennzeichnet, dass** zumindest die Übertragungsrate des asynchronen Datensignals des wenigstens zweiten Teilnehmers (201) derart variabel vorgebbar ist, dass damit die Anzahl der Binärsignale pro Zeitabschnitt (Tₚₑᵣ), welcher aus der Übertragungsrate des pulsweitenmodulierten Datensignals ermittelbar ist, einstellbar ist.

5. Verfahren nach Anspruch 1, **dadurch gekennzeichnet, dass** die Daten des asynchronen Datensignals in Datengruppen aus Binärsignalen mit einem Startbinärsignal (S1), wenigstens einem Stopbinärsignal (S2) und wenigstens einem zwischen dem Startbinärsignal und dem Stopbinärsignal übertragenen Datenbinärsignal (0-7) übertragen werden.

6. Verfahren nach Anspruch 1, **dadurch gekennzeichnet, dass** Daten durch das pulsweitenmodulierte Datensignal synchronisiert derart übertragen werden, dass zu Beginn der Datenübertragung wenigstens ein Synchronisationssignal (300) übertragen wird.

7. Vorrichtung zur Übertragung von Daten mit wenigstens zwei Teilnehmern (200, 201) und einer Verbindung (103) zur Datenübertragung, wobei wenigstens ein Teilnehmer(200) ein pulsweitenmoduliertes Datensignal mit einer vorgebbaren ersten Übertragungsrate überträgt, **dadurch gekennzeichnet, dass** der wenigstens zweite Teilnehmer (201) ein asynchrones Datensignal, welches aus Binärsignalen besteht mit einer vorgebbaren zweiten Übertragungsrate überträgt, wobei Mittel enthalten sind, durch welche wenigstens eine der beiden Übertragungsraten, insbesondere die des zweiten Teilnehmers (201) derart angepasst, insbesondere erhöht, wird und welche dadurch das pulsweitenmodulierte Datensignal des ersten Teilnehmers (200) durch eine Anzahl der Binärsignale des asynchronen Datensignals des zweiten Teilnehmers (201) nachbilden.

8. Schnittstelle zur Übertragung von Daten zwischen wenigstens zwei Teilnehmern (200, 201), wobei wenigstens ein erster Teilnehmer(200) ein pulsweitenmoduliertes Datensignal mit einer vorgebbaren ersten Übertragungsrate überträgt, **dadurch gekennzeichnet, dass** der wenigstens zweite Teilnehmer (201) ein asynchrones Datensignal, welches aus Binärsignalen besteht mit einer vorgebbaren zweiten Übertragungsrate überträgt, wobei in der Schnittstelle Mittel enthalten sind, durch welche eine der beiden Übertragungsraten, insbesondere die des zweiten Teilnehmers (201) derart angepasst, insbesondere erhöht, wird und welche dadurch das pulsweitenmodulierte Datensignal des ersten Teilnehmers (200) durch eine Anzahl der Binärsignale des asynchronen Datensignals des zweiten Teilnehmers (201) nachbilden.

## Claims

1. Method for transmitting data between at least two subscribers (200, 201), wherein at least one first subscriber (200) transmits a pulse-width-modulated data signal, **characterized in that** the at least second subscriber (201) transmits an asynchronous data signal which is composed of binary signals, the two subscribers (200, 201) transmit the data in each case at a different, predefinable transmission rate and one of the two transmission rates, in particular that of the second subscriber (201) is adapted, in particular increased, in such a way that the pulse-width-modulated data signal of the first subscriber is modelled by a number of the binary signals of the asynchronous data signal.

2. Method according to Claim 1, **characterized in that** the pulse-width-modulated data signal of the first subscriber (200) is modelled in a time period (Tₚₑᵣ) by a number of the binary signals of the asynchronous data signal, which time period (Tpₑᵣ) is predefined and/or determined as a function of the transmission rate of the first subscriber (200).

3. Method according to Claim 1, **characterized in that** the number of binary signals with which the pulse-width-modulated data signal is modelled is predefined and/or determined as a function of the transmission rate of the asynchronous data signal.

4. Method according to Claim 1, **characterized in that** at least the transmission rate of the asynchronous data signal of the at least second subscriber (201) can be predefined in a variable fashion such that in this way the number of binary signals per time period (Tₚₑᵣ) which can be determined from the transmission rate of the pulse-width-modulated data signal can be set.

5. Method according to Claim 1, **characterized in that** the data of the asynchronous data signal is transmitted in data groups composed of binary signals with a start binary signal (S1), at least one stop binary signal (S2) and at least one data binary signal (0-7) transmitted between the start binary signal and the stop binary signal.

6. Method according to Claim 1, **characterized in that** data is transmitted in a synchronized fashion by the pulse-width-modulated data signal in such a way that at the start of the data transmission at least one synchronization signal (300) is transmitted.

7. Device for transmitting data having at least two subscribers (200, 201) and a connection (103) for transmitting data, wherein at least one subscriber (200) transmits a pulse-width-modulated data signal at a predefinable first transmission rate, **characterized in that** the at least second subscriber (201) transmits an asynchronous data signal, which is composed of binary signals, at a predefinable second transmission rate, means being contained which at least one of the two transmission rates, in particular that of the second subscriber (201) adapts in particular increase, and which thus models the pulse-width-modulated data signal of the first subscriber (200) by means of a number of the binary signals of the asynchronous data signal of the second subscriber (201).

8. Interface for transmitting data between at least two subscribers (200, 201), at least one first subscriber (200) transmitting a pulse-width-modulated data signal at a predefinable first transmission rate, **characterized in that** the at least second subscriber (201) transmits an asynchronous data signal, which is composed of binary signals at predefinable second transmission rates, the interface containing means which adapt, in particular increase, one of the two transmission rates, in particular that of the second subscriber (201), and which thus model the pulse-width-modulated data signal of the first subscriber (200) by means of a number of the binary signals of the asynchronous data signal of the second subscriber (201).

## Revendications

1. Procédé de transmission de données entre au moins deux abonnés (200, 201), selon lequel au moins un premier abonné (200) transmet un signal de données à modulation de largeur d'impulsion,
**caractérisé en ce qu'**
au moins le deuxième abonné (201) transmet un signal de données asynchrone composé de signaux binaires, les deux abonnés (200, 201) transmettant les données chacun à un débits de transmission prédéfinissable différent, et l'un des deux débits de transmission, en particulier celui du deuxième abonné (201), est adapté, en particulier augmenté, de sorte que le signal de données à modulation de largeur d'impulsion du premier abonné se trouve reproduit par un nombre de signaux binaires du signal de données asynchrone.

2. Procédé selon la revendication 1,
**caractérisé en ce que**
le signal de données à modulation de largeur d'impulsion du premier abonné (200) est reproduit par un nombre de signaux binaires du signal de données asynchrone dans un créneau de temps (Tₚₑᵣ) prédéfini et/ou déterminé en fonction du débit de transmission du premier abonné (200).

3. Procédé selon la revendication 1,
**caractérisé en ce que**
le nombre de signaux binaires reproduisant le signal de données à modulation de largeur d'impulsion est prédéfini et/ou déterminé en fonction du débit de transmission du signal de données asynchrone.

4. Procédé selon la revendication 1,
**caractérisé en ce qu'**
au moins le débit de transmission du signal de données asynchrone d'au moins le deuxième abonné (201) peut être prédéfini de façon variable pour permettre de régler le nombre de signaux binaires par créneau de temps (Tₚₑᵣ) déterminé à partir du débit de transmission du signal de données à modulation de largeur d'impulsion.

5. Procédé selon la revendication 1,
**caractérisé en ce que**
les données du signal de données asynchrone sont transmises en groupes de données comprenant un signal binaire de départ (S1), au moins un signal binaire d'arrêt (S2) et au moins un signal binaire de données (0-7) transmis entre le signal binaire de départ et le signal binaire d'arrêt.

6. Procédé selon la revendication 1,
**caractérisé en ce que**
des données sont transmises de façon synchronisée par le signal de données à modulation de largeur d'impulsion, de façon à transmettre au début de la transmission de données, au moins un signal de synchronisation (300).

7. Dispositif de transmission de données comprenant au moins deux abonnés (200, 201) et une ligne (103) de transmission de données, au moins l'un des abonnés (200) transmettant un signal de données à modulation de largeur d'impulsion avec un premier débit de transmission prédéfinissable,
**caractérisé en ce qu'**
au moins le deuxième abonné (201) transmet à un deuxième débit de transmission prédéfinissable un signal de données asynchrone composé de signaux binaires, et des moyens permettent d'adapter, en particulier d'augmenter, au moins l'un des deux débits de transmission, en particulier celui du deuxième abonné (201), et reproduisent ainsi le signal de données à modulation de largeur d'impulsion du premier abonné (200) par un nombre de signaux binaires du signal de données asynchrone du deuxième abonné (201).

8. Interface pour la transmission de données entre au moins deux abonnés (200, 201), au moins un premier abonné (200) transmettant un signal de données à modulation de largeur d'impulsion à un premier débit de transmission prédéfinissable,
**caractérisée en ce qu'**
au moins le deuxième abonné (201) transmet à un deuxième débit de transmission prédéfinissable un signal de données asynchrone composé de signaux binaires, l'interface comprenant des moyens pour adapter, en particulier augmenter, l'un des deux débits de transmission, en particulier celui du deuxième abonné (201) et qui reproduisent ainsi le signal de données à modulation de largeur d'impulsion du premier abonné (200) par un nombre de signaux binaires du signal de données asynchrone du deuxième abonné (201).
